# EUROPÄISCHE PATENTSCHRIFT

(11) **EP 3 500 798 B1**
(45) Veröffentlichungstag und Bekanntmachung des Hinweises auf die Patenterteilung: **16.03.2022**
(21) Anmeldenummer: 17754636.3
(22) Anmeldetag: 01.08.2017
(51) Int. Cl.: F24C 7/08

(54) **FESTSTELLEN EINES BRÄUNUNGSGRADS VON GARGUT**
ESTABLISHING A DEGREE OF BROWNING OF FOOD TO BE COOKED
DÉTERMINATION D'UN DEGRÉ DE DORAGE D'UN PRODUIT À CUIRE

(30) Priorität: 18.08.2016 DE 102016215550
(43) Veröffentlichungstag der Anmeldung: 26.06.2019
(73) Patentinhaber: BSH Hausgeräte GmbH, 81739 München (DE)
(72) Erfinder: EBERT, Sandra, 70442 Stuttgart-Feuerbach (DE); SCHLESER, Roland, 70442 Stuttgart-Feuerbach (DE)
(86) Internationale Anmeldenummer: PCT/EP2017/069450
(87) Internationale Veröffentlichungsnummer: WO 2018/033383

(56) Entgegenhaltungen:
- EP-A2- 2 444 733
- DE-A1-102007 048 834

## Beschreibung

Die Erfindung betrifft ein Verfahren zum Feststellen eines Bräunungsgrads von Gargut in einem Garraum eines Haushalts-Gargeräts. Die Erfindung betrifft auch ein Haushalts-Gargerät, das zum Durchführen des Verfahrens eingerichtet ist. Die Erfindung ist insbesondere vorteilhaft anwendbar auf Backöfen.

EP 0 682 243 A1 offenbart ein Gargerät mit einer Bräunungssensorvorrichtung. Das Gargerät weist eine Steuereinheit auf, über die eine Abschaltung erfolgen kann, sobald ein der vom Messsensor vorbestimmter Bräunungsgrad für ein bestimmtes Gargut erreicht wird. Ferner umfasst das Gargerät einen Speicher, in dem Messergebnisse abgelegt werden können. Insbesondere werden eine Vorrichtung und ein Verfahren zur Messung des Bräunungsgrades eines Garguts, insbesondere eines Backgutes angegeben, mit mindestens einer Strahlungsquelle, die eine Messstrahlung und eine Referenzstrahlung unterschiedlicher Wellenlängenbereiche erzeugt, deren Reflektion und Rückstreuung unterschiedlich vom Bräunungsgrad des Garguts beeinflusst wird, die beide über eine Optik auf das Gargut abgestrahlt werden, mit einem Messsensor zur Erfassung der vom Gargut emittierten Strahlung, mit einem Referenzsensor zur Erfassung der Intensitäten der Messstrahlung und der Referenzstrahlung, und mit einer Einrichtung zur Ermittlung des Bräunungsgrades aus der vom Messsensor detektierten Intensität der Messstrahlung, aus der vom Messsensor detektierten Intensität der Referenzstrahlung, aus der vom Referenzsensor detektierten Intensität der Messstrahlung und aus der vom Referenzsensor detektierten Intensität der Referenzstrahlung.

EP 1 504 666 A1 offenbart ein Gargerät mit einer Bräunungssensorvorrichtung, einer Elektronikeinheit und einer Speichereinheit. Um solch ein Gargerät mit gesteigertem Bedienkomfort und gesteigerter Flexibilität in der Anwendung der Bräunungssensorvorrichtung bereitzustellen, wird vorgeschlagen, dass wenigstens ein Datensatz mit einem vorgegebenen Bräunungsgrad eines Garguts mittels einer Eingabeeinheit und der Elektronikeinheit über zumindest zwei Gliederungsebenen abrufbar ist.

DE 10 2005 014 713 A1 offenbart eine Sensorvorrichtung mit einer Datenverarbeitungseinheit zum Bestimmen eines Bräunungsgrads eines in einem Garraum angeordneten Garguts und mit wenigstens einem Sensor zum Erfassen einer vom Gargut reflektierten Strahlungsintensität. Um eine Sensorvorrichtung für Gargeräte bereitzustellen, mittels der ein Bräunungsgrad eines Garguts sicher, zuverlässig und insbesondere unabhängig von einer Größe und Form des Garguts bestimmt werden kann, wird vorgeschlagen, dass die Datenverarbeitungseinheit zum Bestimmen eines Relevanzparameters für eine Kenngröße der erfassten Strahlungsintensität abhängig von dem zeitlichen Verlauf der erfassten Strahlungsintensität vorgesehen ist.

EP 1 504 665 A1 offenbart eine Bräunungssensorvorrichtung zur Ermittlung eines Bräunungsgrades eines Garguts, die eine Sendeeinheit und eine Empfängereinheit sowie eine Schnittstelle zu einem Garraum bildende Koppeleinheit aufweist. Dazu wird vorgeschlagen, dass die Koppeleinheit zumindest zwei Koppelmittel umfasst. Weiterer Stand der Technik ist den Dokumenten DE 10 2007 048834 A1 und EP 2 444 733 A2 zu entnehmen.

Bei der optischen Bräunungserkennung ist es problematisch, dass eine Aussage, wann eine gewünschte Bräunung erreicht ist, nur schwer zu treffen ist. So kann von einem Nutzer ein Gargut bereits als verbrannt angesehen werden, wenn bereits eine nur kleine Teilfläche verkohlt ist. Eine Beobachtung des Garguts mittels örtlich hochauslösender Kameras mit hoher Farbtiefe ist jedoch aufwändig und teuer. Dabei tritt erschwerend hinzu, dass es sich bei dem Bräunungsvorgang um einen stark nichtlinearen Vorgang handelt, bei dem bereits dunkle Partien der Oberfläche die Wärmestrahlung stärker absorbieren als helle Bereiche. Daher ist eine zeitlich ständige und genaue Beobachtung des Garguts erforderlich, um einen gewünschten Bräunungsgrad und insbesondere ein rechtzeitiges Ausschalten eines Heizvorgangs zuverlässig zu erreichen.

Es ist die Aufgabe der vorliegenden Erfindung, die Nachteile des Standes der Technik zumindest teilweise zu überwinden und insbesondere eine Möglichkeit zur Bräunungserkennung von Gargut mit erhöhter Genauigkeit bereitzustellen, die mittels einer vergleichsweise einfachen Kamera umsetzbar ist.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch ein Verfahren zum Feststellen eines Bräunungsgrads von Gargut in einem Garraum eines Haushalts-Gargeräts. Das Haushalts-Gargerät weist dazu eine in den Garraum gerichtete Kamera und eine Lichtquelle zum Beleuchten des Garraums auf. Bei dem Verfahren wird mittels der Kamera ein Referenz-Differenzbild als Differenz aus einem ersten, bei einer ersten Helligkeit der Lichtquelle aufgenommenen Bild des Garguts und einem zweiten, bei einer zweiten Helligkeit der Lichtquelle aufgenommenen Bild des Garguts erzeugt wird, folgend- mittels der Kamera ein Mess-Differenzbild als Differenz aus einem ersten, bei der ersten Helligkeit der Lichtquelle aufgenommenen Messbild des Garguts und einem zweiten, bei der zweiten Helligkeit der Lichtquelle aufgenommenen Messbild des Garguts erzeugt wird,- ein Bräunungsbild durch Subtraktion des Mess-Differenzbilds mit dem Referenz-Differenzbild erzeugt wird und- der Bräunungsgrad durch Bestimmen eines vorgegebenen Anteils (n) von Bildpunkten in dem Bräunungsbild mit einer Mindestverfärbung festgestellt wird.

Dieses Verfahren ergibt den Vorteil, dass es eine räumlich aufgelöste Bestimmung eines zeitlichen Bräunungsverlaufs eines Garguts erlaubt, und zwar unabhängig von einem vorhandenen Streulicht, das z.B. durch eine Sichtscheibe einer Garraumtür in den Garraum dringen kann. Dieses Eliminieren einer Fehlerquelle bei der ortausgelösten Bestimmung der Farbe und/oder der Helligkeit des Garguts erleichtert ein rechtzeitiges Erkennen eines Bräunungsgrads erheblich. Zudem können aufgrund der Differenzbildung auch gering auflösende und damit besonders preiswerte Kameras eingesetzt werden. Darüber hinaus kann auf einem Weißabgleich verzichtet werden.

Erfindungsgemäßist das Referenz-Differenzbild ein "störlichtnormiertes" Differenzbild, was einen Vergleich mit dem aus den Messbildern erzeugten Differenzbild erleichtert. Das Referenz-Differenzbild wird analog zu dem aus den Messbildern erzeugten Differenzbild erzeugt, aus einem ersten, bei der ersten Helligkeit aufgenommenen Bild und einem zweiten, bei der zweiten Helligkeit aufgenommenen Bild, insbesondere zu Beginn eines Garvorgangs. Das "doppelt differenzierte" Bräunungsbild wird als Differenz eines Mess-Differenzbilds und eines Referenz-Differenzbilds bereitgestellt. Das Referenz-Differenzbild wird im Folgenden auch als "Differenzbild" bezeichnet. Erfindungsgemäßist das Referenz-Differenzbild ein "störlichtnormiertes" Differenzbild, was einen Vergleich mit dem aus den Messbildern erzeugten Differenzbild erleichtert. Das Referenz-Differenzbild wird analog zu dem aus den Messbildern erzeugten Differenzbild erzeugt, aus einem ersten, bei der ersten Helligkeit aufgenommenen Bild und einem zweiten, bei der zweiten Helligkeit aufgenommenen Bild, insbesondere zu Beginn eines Garvorgangs. Das "doppelt differenzierte" Bräunungsbild wird als Differenz eines Mess-Differenzbilds und eines Referenz-Differenzbilds bereitgestellt. Das Referenz-Differenzbild wird im Folgenden auch als "Referenzbild" bezeichnet.

Das Mess-Differenzialbild wird im Folgenden auch als "Differenzbild" bezeichnet.

Anstelle oder analog zu der Helligkeit kann auch eine andere geeignete Strahlungsgröße wie ein Lichtstrom oder eine Lichtstärke verwendet werden.

Das Haushalts-Gargerät kann einen Backofen aufweisen, wobei der Garraum dann auch als ein Ofenraum bezeichnet werden kann. Das Haushaltsgargerät kann eine Mikrowellenfunktionalität und/oder eine Dampfbehandlungsfunktionalität aufweisen. Das Haushalts-Gargerät kann auch ein Mikrowellengerät und/oder ein Dampfgarer sein.

Der Garraum weist insbesondere eine Beschickungsöffnung auf, die mittels einer Garraumtür verschließbar ist. Die Garraumtür kann ein Sichtfenster zur Einsicht in den Garraum aufweisen.

Das Gargut kann auch als Speise oder Lebensmittel bezeichnet werden.

Die Kamera weist einen Bildsensor auf, z.B. einen CCD-Sensor oder einen CMOS-Sensor. Die Kamera kann mit einer Bildverarbeitungseinheit versehen oder gekoppelt sein, welche aus den Messsignalen des Bildsensors ein Bild erzeugt. Die Kamera kann auch lediglich den Bildsensor aufweisen bzw. ein Bildsensor sein. Die Kamera kann eine Farbkamera sein (d.h., dass sie farbige Bilder aufnehmen kann) oder kann eine Schwarz-Weiß-Kamera sein (d.h., dass sie Graustufenbilder aufnehmen kann).

Die Kamera kann ferner ein dem Bildsensor optisch vorgeschaltetes Objektiv aufweisen. Die Kamera ist insbesondere eine Digitalkamera. Die Kamera kann einen Speicher zum Speichern der damit aufgenommenen Bilder aufweisen oder mit einem solchen Speicher verbunden sein. Der Speicher kann einen Teil des Haushaltsgeräts darstellen oder datentechnisch mit dem Haushaltsgerät verbunden sein, z.B. ein Online-Speicher.

Die Kamera kann an einer Decke oder einer Seitenwand des Garraums angeordnet sein.

Das Haushaltsgerät kann genau eine Kamera aufweisen, was besonders preiswert ist.

Das Haushaltsgerät kann aber auch mehrere Kameras aufweisen, wodurch sich der Garraum besonders vollständig überwachen lässt, z.B. auf mehreren Beschickungsebenen. Das Verfahren kann dann für jede der Kameras durchgeführt werden. Durch das Aufnehmen der beiden Messbilder bei unterschiedlich eingestellter Helligkeit der Lichtquelle und folgender Differenzbildung kann der Einfluss eines nicht durch die Lichtquelle in den Garraum eingebrachten Stör- oder Streulichts berücksichtigt und insbesondere auch kompensiert werden.

Es ist eine Weiterbildung, dass das Aufnehmen des ersten Messbilds, das Aufnehmen des zweiten Messbilds, das Erzeugen des (Mess-)Differenzbilds und Vergleichen des (Mess-)Differenzbilds mit dem Referenzbild mehrfach für unterschiedliche erste und zweite Messbilder bzw. (Mess-)Differenzbilder und das gleiche Referenzbild durchgeführt wird. So können zeitlich aufeinanderfolgende Vergleiche zur Bräunungsbestimmung anhand einer gleichen Referenz durchgeführt werden. In anderen Worten können die zweiten bis fünften Schritte mehrfach für das gleiche Referenzbild durchgeführt werden.

Es ist eine Weiterbildung, dass das Vergleichen des Differenzbilds mit dem Referenzbild ein Verknüpfen der beiden Bildinhalte umfasst. Das Verknüpfen der beiden Bildinhalte kann ein Anwenden einer mathematischen Operation umfassen. Es ist eine Weiterbildung, dass das Vergleichen ein Vergleichen gleicher Bildbereiche (einschließlich ggf. des gesamten Bilds) umfasst. Es ist eine Weiterbildung, dass das Vergleichen ein bildpunktartiges Vergleichen bzw. ein Vergleichen gleicher Bildpunkte umfasst. Durch das Vergleichen kann eine Bräunung bzw. ein Bräunungsfortschritt anhand eines in dem Referenzbild enthaltenen Ausgangszustands des Garguts und damit besonders genau ermittelt werden.

Das Verfahren kann unter Berücksichtigung einer Farbinformation erfolgen. Dies ergibt den Vorteil, dass eine Bräunung auch von Gargut erkannt werden kann, bei dem bei einer Bräunung es unter zumindest ungefährer Beibehaltung der Helligkeit zu einem Farbwechsel kommt. Dies kann z.B. der Fall sein, wenn sich anfänglich dunkelgrünes Gargut braun färbt.

Es ist eine Weiterbildung, dass zum Erzeugen des Differenzbilds aus dem ersten und dem zweiten Messbild die Werte jeweiliger Farbkanäle (beispielsweise rot, grün und blau) gleicher Bildpunkte voneinander subtrahiert werden. Das Vergleichen dieses farbigen Differenzbilds mit dem Referenzbild kann wiederum unter Berücksichtigung einer Farbinformation erfolgen, z.B. getrennt für jeden Farbkanal, z.B. bildpunktweise. So ist es möglich, einen minimalen Abstand eines Bildpunkts in einem Farbraum (z.B. in einem dreidimensionalen RGB-Raum) von einem vorgegebenen Farbort (z.B. einem RGB-Wertetripel) oder auch von einem vorgegebenen Bereich im Farbraum, der beispielsweise die Farben dunkelbraun bis schwarz umfasst, zu erfassen und diesen Abstand zum Vergleichen heranzuziehen.

Alternativ kann das Vergleichen ohne Berücksichtigung einer Farbinformation durchgeführt werden, beispielsweise indem die Farbinformation zum Vergleichen in eine Helligkeitsinformation / einen Graustufenwert umgewandelt wird.

Das Verfahren kann aber auch unter Berücksichtigung nur einer Helligkeitsinformation oder Graustufeninformation erfolgen, was das Vergleichen besonders einfach gestaltet. So kann dann, wenn die beteiligten Bilder Graustufenbilder sind, eine Differenzbildung eine einfache bildpunktweise Subtraktion der Graustufenwerte umfassen. Auch kann sich das Vergleichen auf ein Vergleichen von Graustufenwerten beschränken lassen.

Es ist eine Weiterbildung, dass das Referenzbild zu Beginn eines Garvorgangs aufgenommen wird. Dies ermöglicht eine besonders genaue Bestimmung eines Ausgangszustands des Garguts vor oder zu Beginn seiner Bräunung.

Das Verfahren kann vollständig mittels des Haushaltsgeräts durchgeführt werden, was den Vorteil ergibt, dass das Haushaltsgerät die Bräunung selbsttätig feststellen kann und beispielsweise nicht auf eine Datenverbindung mit einer externen Komponente angewiesen ist. Das Verfahren kann aber auch mittels eines verteilten Systems durchgeführt werden, welches das Haushaltsgerät und mindestens eine andere, mit dem Haushaltsgerät datentechnisch (z.B. über eine drahtlose und/oder drahtgebundene Datenverbindung) verbundene Komponente aufweist. Die andere Komponente kann hardwaretechnisch und/oder softwaretechnisch ausgebildet sein. Die andere Komponente kann z.B. ein Server eines Hausgeräteherstellers sein. Das verteilte System weist den Vorteil auf, dass eine Datenverarbeitungskapazität des Haushaltsgeräts gering gehalten werden kann, was wiederum die Kosten für ein solches Haushaltsgerät besonders gering hält. Beispielsweise kann ein Bildverarbeiten, einschließlich der Differenzbildung und des Vergleichens, extern durchgeführt werden, z.B. auf einem Rechner des Haushaltsgeräteherstellers, in einer Cloud usw.

Es ist eine Ausgestaltung, dass das Vergleichen ein Bestimmen, ob ein Ergebnis des Vergleichens ein vorgegebenes Kriterium erfüllt, umfasst. Dieses Kriterium kann einem Erreichen eines gewünschten Bräunungsgrads entsprechen. Das Vergleichen kann auch ein Bestimmen von mehreren Kriterien umfassen, die z.B. unterschiedlichen Bräunungsgraden entsprechen, beispielsweise einem minimalen Bräunungsgrad und einem maximalen Bräunungsgrad. Es ist eine Weiterbildung, dass die verschiedenen Kriterien verknüpft erfüllt sein müssen, um eine Aktion auszulösen (siehe auch weiter unten). Dieser Schritt des Bestimmens kann auch als ein dem Vergleichen nachfolgender Schritt angesehen werden.

Es ist noch eine Ausgestaltung, dass die erste Helligkeit Null ist und die zweite Helligkeit einer Helligkeit bei eingeschalteter Lichtquelle entspricht. Dadurch lässt sich der Einfluss des Störlichts besonders einfach berücksichtigen und ausschließen. Das erste Messbild wird also bei ausgeschalteter Lichtquelle aufgenommen (wobei der Garraum nur durch von außen einfallendes Störlicht beleuchtet wird), und das zweite Messbild bei eingeschalteter Lichtquelle. Ein bei einer Helligkeit Null (kein Kunstlicht, nur Störlicht) aufgenommenes Bild kann auch als ein Dunkelbild bezeichnet werden. Ein bei eingeschalteter Lichtquelle (Kunstlicht und Störlicht) aufgenommenes Bild kann auch als ein Hellbild bezeichnet werden.

Es ist eine Weiterbildung, dass eine Helligkeit der Lichtquelle von Null einer ausgeschalteten Lichtquelle entspricht. Es ist noch eine Weiterbildung, die Lichtquelle zwischen zwei Zuständen umschaltbar ist, nämlich einem ausgeschalteten Zustand und einem eingeschalteten Zustand. Die erste Helligkeit kann eine maximal einstellbare Helligkeit sein.

Es ist eine Weiterbildung, dass die Lichtquelle helligkeitsmoduliert betrieben wird. Dies kann ein regelmäßiges, insbesondere periodisches, Betreiben der Lichtquelle zwischen zwei Helligkeitswerten oder Helligkeitsniveaus umfassen, insbesondere ein regelmäßiges Ein- und Ausschalten der Lichtquelle. Diese Weiterbildung ergibt den Vorteil, dass die Kamera die Bilder - insbesondere Messbilder - innerhalb der jeweiligen Periodenabschnitte aufnehmen kann. Die Helligkeitsmodulation kann beispielsweise durch ein Anlegen einer entsprechenden Spannung an die Lichtquelle erreicht werden. Die Helligkeitsmodulation kann auch als eine Modulation des von der Lichtquelle abgegebenen Lichtstroms verstanden werden.

Es ist eine Weiterbildung, dass das Haushalts-Gargerät eine Steuereinrichtung aufweist, welche die Kamera und die Lichtquelle steuert, insbesondere eine Belichtung der Kamera mit einer Helligkeit der Lichtquelle synchronisiert. Weist das Haushalts-Gargerät mehrere Lichtquellen auf, kann die Steuereinrichtung diese zum zeitgleichen Betrieb synchronisieren.

Es ist eine weitere Ausgestaltung, dass die Lichtquelle pulsweitenmoduliert betrieben wird. Dies ermöglicht eine besonders einfache Ansteuerung und einen zeitlich besonders scharfen Übergang zwischen Ein- und Aus-Phase. Die Steuereinrichtung kann eine Belichtungsphase der Kamera mit einer Ein-Phase oder einer Aus-Phase der Lichtquelle zum Erzeugen eines Hellbilds bzw. Dunkelbilds synchronisieren.

Es ist noch eine weitere Ausgestaltung, dass die Lichtquelle mit einer augenträgen Frequenz betrieben wird. Dadurch kann verhindert werden, dass ein Betrachter des Garraums die Helligkeitsschwankungen der helligkeitsmodulierten Lichtquelle wahrnimmt. Unter einer "augenträgen" Frequenz wird eine Frequenz verstanden, bei der die Trägheit des menschlichen Auges diese Helligkeitsschwankungen zeitlich nicht mehr unterscheiden kann und somit zeitlich integriert. Es ist eine Weiterbildung, dass die Lichtquelle mit einer Frequenz von mindestens 25 Hz helligkeitsmoduliert wird. Es ist für eine besonders sichere Vermeidung wahrnehmbarer Helligkeitsschwankungen besonders vorteilhaft, dass die Lichtquelle mit einer Frequenz von mindestens 50 Hz helligkeitsmoduliert wird.

Es ist ferner eine Ausgestaltung, dass das erste Messbild während mindestens einer Aus-Phase der Pulsweitenmodulierung aufgenommen wird und das zweite Messbild während mindestens einer Ein-Phase der Pulsweitenmodulierung aufgenommen wird. So lassen sich das erste Messbild und das zweite Messbild ohne Änderung der Helligkeitsmodulation aufnehmen. Das erste Messbild kann während genau einer Aus-Phase oder während mehrerer Aus-Phasen aufgenommen werden. Das zweite Messbild kann während genau einer Ein-Phase oder während mehrerer Ein-Phasen aufgenommen werden. Das Aufnehmen während mehrerer Phasen erhöht eine Belichtungszeit und kann ein Bildrauschen verringern.

Es ist ferner eine Ausgestaltung, dass die Lichtquelle eine LED aufweist oder ist. Die Lichtquelle kann genau eine LED oder mehrere LEDs aufweisen oder sein. Die Verwendung von LEDs weist den Vorteil auf, dass sich diese mit hohen Frequenzen helligkeitsmodulieren lassen, insbesondere pulsweitenmodulieren lassen. Zudem ist ihre Helligkeit durch Anlegen einer entsprechenden Spannung sehr genau einstellbar, was für die Bestimmung des Bräunungsgrads besonders vorteilhaft ist. Auch sind LEDs besonders langlebig und nehmen wenig Bauraum ein. Die Steuereinrichtung kann einen Treiber zum Betreiben der LED(s) aufweisen.

Es ist eine Weiterbildung, dass das ganze aufgenommene Differenzbild mit dem ganzen aufgenommenen Referenzbild verglichen wird. Dies ergibt den Vorteil, dass besonders viele Speisen gleichzeitig überwachbar sind und/oder dass alle im Sichtfeld der Kamera befindlichen Speisen sicher überwacht werden können.

Es ist auch eine Ausgestaltung, dass das Differenzbild bereichsweise mit dem Referenzbild verglichen wird. Dabei wird also nicht das ganze Bild betrachtet sondern nur ein Ausschnitt davon. Dies ergibt den Vorteil, dass der Bräunungsgrad genauer bestimmbar ist. Es ist eine Weiterbildung, dass das Differenzbild mit dem Referenzbild in einem Bereich verglichen wird, der mindestens eine Speise umfasst oder zeigt. Dabei werden also Bildbereiche nicht berücksichtigt oder "maskiert", die keine Speisen zeigen und folglich auch keinen sinnvollen Beitrag zur Bestimmung des Bräunungsgrads beitragen. Der betrachtete Bereich kann ein zusammenhängender Bereich sein oder mehrere unzusammenhängende Teilbereiche aufweisen. Die mehreren unzusammenhängenden Teilbereiche können unterschiedliche Speisen zeigen (beispielsweise mehrere Muffins, Plätzchen o.ä.).

Es ist eine Weiterbildung, dass mehrere Teilbereiche unabhängig voneinander überwacht bzw. dem Verfahren unterzogen werden. Dies ergibt den Vorteil, dass unterschiedliche Speisen mit einem unterschiedlichen Bräunungsverhalten individuell auf das Erreichen eines vorgegebenen Bräunungsgrads hin überwacht werden können. Bei dieser Weiterbildung können sich Teilbereiche auch überlappen.

Es ist eine Weiterbildung, dass ein zum Vergleichen ausgewählter Bildbereich oder Bildausschnitt von einem Nutzer vorgegeben worden ist bzw. nur Bereiche des Differenzbilds mit dem Referenzbild verglichen werden, die zuvor von einem Nutzer vorgegeben worden sind. So kann eine besonders präzise und auf einen Nutzerwunsch genau abgestimmte Auswahl eines Bildbereichs bereitgestellt werden. Es ist eine Weiterbildung, dass das Haushalts-Gargerät dazu einen Bildschirm aufweist, auf dem von der Kamera aus dem Garraum aufgenommene Bilder darstellbar sind. Das Haushalts-Gargerät, insbesondere dessen Bildschirm, kann ferner dazu eingerichtet sein, es dem Nutzer zu erlauben, einen Bildrahmen (auch als "Bounding Box" bezeichnet) um den gewünschten Bildbereich zu legen und so den betrachteten Bildbereich festzulegen. Es können auch mehrere Bildrahmen festlegbar sein. Diese können unzusammenhängend sein oder sich überlappen. Alternativ oder zusätzlich kann ein Nutzer die Bildbereiche von einem Mobilfunkgerät oder einem Computer aus ("remote") eingeben.

Es ist eine zusätzliche oder alternative Weiterbildung, dass der Bildbereich automatisch ausgewählt wird, z.B. durch das Haushalts-Gargerät oder mittels einer mit dem Haushalts-Gargerät gekoppelten externen Auswertungseinrichtung. Es ist eine Weiterbildung, dass das Haushalts-Gargerät dazu eingerichtet ist, eine Bilderkennung auf in dem Bild abgebildeten Speisen oder Gargut durchzuführen und nur Bildbereiche zu betrachten, die Speisen aufweisen oder entsprechen.

Es ist zudem eine Ausgestaltung, dass nur Bereiche des Differenzbilds mit dem Referenzbild verglichen werden, die frei von einem vorgegebenen Muster sind. Dies ermöglicht eine besonders genaue Begrenzung der zum Vergleich zu betrachtenden Bildbereiche auf das Gargut. Dabei wird ausgenutzt, dass Gargut in der Regel kein regelmäßiges Muster an seiner Oberfläche zeigt. Folglich kann - insbesondere mittels des Haushalts-Gargeräts - in einem aufgenommenen Bild ein vorgegebenes Muster bzw. ein das Muster aufweisender Bildbereich erkannt werden und zum Vergleichen unberücksichtigt bleiben. Diese Mustererkennung kann z.B. in einer Steuereinrichtung des Haushalts-Gargeräts durchgeführt werden, die eine entsprechende Bildauswertungsfunktion besitzt. Das Muster kann ein regelmäßiges Muster sein, beispielsweise ein Matrixmuster, ein Linienmuster, ein Ringmuster usw. Grundsätzlich kann zur Mustererkennung ein einziges Muster vorgegeben sein, oder es können mehrere Muster vorgegeben sein.

Es ist eine Weiterbildung, dass ein Auflagebereich eines Gargutträgers (z.B. eines Backblechs o.ä.) mit einem solchen Muster ausgestattet ist. Wo Gargut aufliegt, ist das Muster nicht sichtbar. Es ist eine alternative oder zusätzliche Weiterbildung, dass Backpapier mit einem solchen Muster ausgestattet ist.

Es ist außerdem eine Ausgestaltung, dass nur Bereiche des Differenzbilds mit dem Referenzbild verglichen werden, die mit fortschreitendem Garvorgang merklich dunkler geworden sind. Dies ermöglicht eine besonders genaue und einfache Bestimmung eines Bildbereichs. Diese Ausgestaltung kann zusätzlich oder alternativ zu anderen Methoden zum Bestimmen eines Bildbereichs verwendet werden. Dabei wird ausgenutzt, dass praktisch nur bräunendes Gargut mit fortschreitendem Garvorgang dunkler wird.

Es ist eine Weiterbildung, dass zum Bestimmen, welche Bildbereiche merklich dunkler geworden sind, mittels der Kamera zwei zeitlich beabstandete Bilder aufgenommen werden und deren Helligkeitsunterschiede ortsaufgelöst (z.B. bildpunktweise) verglichen werden. Der zeitliche Abstand der Bildaufnahmen kann vorgegeben werden. Der zeitliche Abstand der Bildaufnahmen kann variabel vorgegeben werden, z.B. abhängig von einer eingestellten Garraumtemperatur, einer Art des Garguts usw. Als Bilder können insbesondere die Messbilder oder die Differenzbilder verwendet werden.

Es ist zudem noch eine Ausgestaltung, dass das Referenzbild zeitlich versetzt erneut aufgenommen wird. Dies ergibt den Vorteil, dass - insbesondere körperliche - Veränderungen des Garguts während des Garvorgangs mit berücksichtigt werden können. Solche Veränderungen können ein Aufgehen des Garguts (z.B. von Hefeteig) usw. umfassen. Bei dieser Ausgestaltung kann das neu aufgenommene Referenzbild das zuvor verwendete Referenzbild ersetzen, so dass das Verfahren ab dann mit dem zuletzt aufgenommenen Referenzbild durchgeführt wird. Der zeitliche Abstand oder Versatz der Aufnahmen der Referenzbilder kann fest vorgegeben sein. Der zeitliche Abstand kann alternativ variabel vorgegeben werden, z.B. abhängig von einer eingestellten Garraumtemperatur, einer Art des Garguts usw.

Es ist eine alternative oder zusätzliche Weiterbildung, dass ein neues Referenzbilds abhängig von einem Eintreten eines Ereignisses aufgenommen wird. Beispielsweise kann ein Referenzbild nach jedem Öffnen und Schließen der Garraumtür neu aufgenommen werden, um eventuelle Verschiebungen des Garguts (auf dem Backblech oder durch Verschieben des Backblechs), ein Entnehmen oder Hinzufügen von Gargut usw. berücksichtigen zu können.

Es ist außerdem noch eine Ausgestaltung, dass auf Grundlage des Vergleichens durch das Haushalts-Gargerät mindestens eine Aktion ausgelöst wird, und zwar insbesondere abhängig davon, ob das Vergleichen ergibt, dass ein vorgegebenes Kriterium erfüllt ist oder nicht. Die Aktion kann beispielsweise ein Abschalten einer Wärmequelle oder einer Heizung des Garraums und/oder ein Benachrichtigen eines Nutzers umfassen. Das Benachrichtigen des Nutzers kann ein akustisches Benachrichtigen (z.B. mittels Aktivierens eines Summers) und/oder ein optisches Benachrichtigen (z.B. mittels Aktivierens eines Blinklichts) und/oder ein Benachrichtigen durch Übertragen einer Nachricht an ein externes Gerät (z.B. ein Mobiltelefon, eine intelligente Uhr / Smartwatch usw.) umfassen. Zum Übertragen der Nachricht an das externe Gerät kann das Haushalts-Gargerät mit einer drahtlosen Kommunikationsschnittstelle (z.B. einem Bluetooth-Modul oder einem WLAN-Modul) und/oder einer drahtgebundenen Kommunikationsschnittstelle (z.B. mit einem Ethernet-Anschluss) ausgerüstet sein. Die übertragene Nachricht kann ein aufgenommenes Bild des Garraums umfassen oder beinhalten. Der Nutzer kann in einer Weiterbildung den Garvorgang fernsteuern, z.B. abbrechen oder verlängern. Dazu kann er beispielsweise durch das an ihn übertragene Bild des Garraums veranlasst worden sein.

Es ist noch eine Ausgestaltung, dass das Ergebnis des Vergleichens ein Erreichen eines vorgegebenen Anteils von Bildpunkten mit einer Mindestverfärbung umfasst. Dies ermöglicht eine besonders zuverlässige Feststellung einer auch großflächigen Bräunung. Unter einer "Mindestverfärbung" kann bei Berücksichtigung einer Farbinformation ein Mindestwert einer Änderung eines Farbwerts (Orts im Farbraum) in Richtung braun oder schwarz verstanden werden.

Wird der Vergleich anhand von Graustufenbildern durchgeführt, kann als die Mindestverfärbung ein Mindestwert eines Unterschieds einer Helligkeit eines Bildpunkts des Differenzbilds im Vergleich zu einer Helligkeit des gleichen Bildpunkts des Differenzbilds verstanden werden. Ändert sich beispielsweise die Helligkeit dieses Bildpunkts zwischen Differenzbild und Referenzbild nicht, ist der Helligkeitsunterschied Null. Wird hingegen der Bildpunkt des Differenzbilds aufgrund einer Bräunung dunkler, tritt ein (absoluter) Helligkeitsunterschied größer Null auf. Je stärker die Bräunung ist, desto größer wird der Helligkeitsunterschied.

Der Anteil von Bildpunkten mit der Mindestverfärbung lässt sich - insbesondere bei Graustufenbildern - beispielsweise als ein Histogramm des durch das Vergleichen bestimmten Helligkeitsunterschieds des jeweiligen Bildpunkts auftragen. Ist eine Zahl oder ein Anteil der Bildpunkte, die sich oberhalb eines vorgegebenen ersten Schwellwerts des (absoluten) Helligkeitsunterschieds befinden, gleich oder größer als ein zweiter Schwellwert, ist eine gewünschte Bräunung erreicht, und es kann die Aktion ausgelöst werden. Der erste Schwellwert kann auch dazu verwendet werden, um einen Überschreiten einer maximalen Bräunung festzustellen und die Heizung abzustellen, bevor sich ein merklich verbrannter Bereich an dem Gargut bildet.

Der dem Flächenanteil des Garguts entsprechende Anteil der Bildpunkte mit einer Mindestverfärbung kann durch das Haushalts-Gargerät vorgegeben sein (ggf. abhängig von einer Garraumtemperatur und/oder einer Art des Garguts usw.) und/oder von einem Nutzer eingestellt werden. Beispielsweise können der erste Schwellwert für eine stärkere Bräunung und der zweite Schwellwert für eine großflächigere Bräunung hochgesetzt werden.

Es ist zudem noch eine Ausgestaltung, dass eine alterungsbedingte Helligkeitsreduzierung der Lichtquelle kompensiert wird. Dies kann auf grundsätzlich bekannte Weise durch das Haushalts-Gargerät (z.B. dessen Steuereinrichtung) oder die Lichtquelle selbst durchgeführt werden. Beispielsweise kann zur Kompensation einer alterungsbedingten Verringerung der Lichtausbeute einer LED deren Betriebsstrom heraufgesetzt werden. Die Aufgabe wird auch gelöst durch ein Haushalts-Gargerät, das zum Durchführen des Verfahrens wie oben beschrieben eingerichtet ist. Das Haushalts-Gargerät kann analog zu dem Verfahren ausgebildet werden und weist die gleichen Vorteile auf.

Beispielsweise ist es eine Ausgestaltung, dass das Haushalts-Gargerät einen Garraum, eine in den Garraum gerichtete Kamera und eine Lichtquelle zum Beleuchten des Garraums aufweist. Das Haushalts-Gargerät kann - beispielsweise durch eine entsprechende hardwaretechnische und/oder softwaretechnische Ausgestaltung einer Steuereinrichtung - in der Lage sein, das Verfahren .

Das Haushalts-Gargerät kann eine eigenständige Auswerteeinrichtung (ggf. einschließlich einer Bildverarbeitungsfunktionalität) aufweisen, welche mit der Steuereinrichtung gekoppelt oder verbunden ist. Das Haushalts-Gargerät kann aber auch eine Steuereinrichtung aufweisen, in welche die Funktionen einer Auswerteeinrichtung integriert sind. Die Auswerteeinrichtung kann aber zumindest teilweise außerhalb des Gargeräts angeordnet oder umgesetzt sein; sie ist dann mit dem Haushalts-Gargerät datentechnisch gekoppelt. Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt als Schnittdarstellung in Seitenansicht ein Haushalts-Gargerät mit einem Garraum, einer Kamera und einer Lichtquelle;
- Fig.2: zeigt einen zeitlichen Verlauf eine auf die Lichtquelle aufgeprägten Betriebsstroms;
- Fig.3: zeigt einen zeitlichen Verlauf einer für einen bestimmten Bildpunkt von der Kamera gemessenen Strahlungsintensität;
- Fig.4: zeigt ein Mess-Differenzbild zu einem ersten Zeitpunkt;
- Fig.5: zeigt ein Mess-Differenzbild zu einem späteren zweiten Zeitpunkt;
- Fig.6: zeigt ein Bräunungsbild; und
- Fig.7: zeigt ein Graustufen-Histogramm der Bildpunkte des Bräunungsbilds.

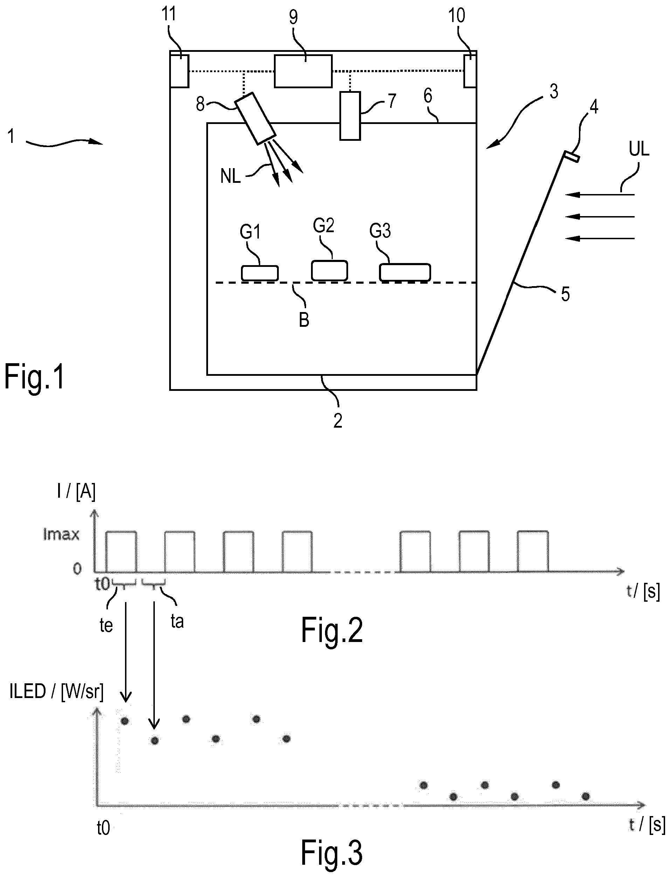

Fig.1 zeigt als Schnittdarstellung in Seitenansicht ein Haushalts-Gargerät 1 mit einem beheizbaren Garraum 2. Der Garraum 2 kann ein Ofenraum sein, und das Haushalts-Gargerät 1 kann ein Backofen oder ein Herd sein.

Der Garraum 2 weist vorderseitig eine Beschickungsöffnung 3 auf, die mittels einer Tür 4 verschließbar ist. Die Tür 4 weist ein Sichtfenster 5 auf, durch das ein Nutzer Einblick in den Garraum 2 erhält und durch das Umgebungslicht UL von außen in den Garraum 2 fallen kann. An einer Decke 6 einer Garraumwandung ist eine Kamera 7 angeordnet, die also von oben in den Garraum 2 gerichtet ist. An der Decke 6 ist ferner eine Lichtquelle in Form einer weißes Nutzlicht NL in den Garraum 2 abstrahlenden LED 8 angeordnet. Die Kamera 7 und die LED 8 sind mit einer Steuereinrichtung 9 verbunden, die auch mit einem als Bedienfeld nutzbaren berührungsempfindlichen Bildschirm 10 und mit einem Funkmodul 11 zur drahtlosen Datenübertragung verbunden ist. In dem Garraum 2 befinden sich auf einem Gargutträger in Form eines Backblechs B mehrere Speisen G1 bis G3, die im Sichtfeld der Kamera 7 liegen.

Die Steuereinrichtung 9 ist dazu eingerichtet, die LED 8 helligkeitsmoduliert zu betreiben, beispielsweise mit einem Rechtecksignal mit einer Frequenz von mindestens 50 Hz. Die LED 8 wird dazu mittels der Steuereinrichtung 9 mindestens 50-mal in der Sekunde ein- und ausgeschaltet. Ist die LED 8 ausgeschaltet, werden der Garraum 2 und somit die Speisen G1 bis G3 nur mittels des Umgebungslichts UL beleuchtet, bei angeschalteter LED 8 hingegen zusammen durch deren Nutzlicht NL und das Umgebungslicht UL. Die Steuereinrichtung 9 kann auch eine Bildaufnahme der Kamera 7 steuern, und zwar insbesondere synchron zu Ein-Phasen te bzw. Aus-Phasen ta der LED 8. Die Steuereinrichtung 9 kann auch zur Bildverarbeitung eingerichtet sein.

Insbesondere ist die Steuereinrichtung 9 dazu eingerichtet, die Kamera 7 und die LED 8 so anzusteuern, dass zunächst zu Beginn eines Garvorgangs (bei t = t0) mittels der Kamera 9 ein Referenz-Hellbild während einer Ein-Phase te der LED 8 und während einer daran anschließenden Aus-Phase ta der LED 8 ein Referenz-Dunkelbild aufgenommen wird, wie in Fig.2 angedeutet. Dazu wird die LED 8 während einer Aus-Phase ta nicht bestromt und während einer Ein-Phase te mit einem maximalen elektrischen Strom Imax (in Ampere) bestromt.

Grundsätzlich kann das Referenz-Dunkelbild auch vor dem Referenz-Hellbild aufgenommen werden. Zwischen dem Referenz-Hellbild und dem Referenz-Dunkelbild vergeht vorteilhafterweise eine geringe Zeitdauer, damit das als Störlicht wirkende Umgebungslicht UL gleich bleibt. Besonders vorteilhaft ist eine unmittelbar aneinander anschließende Aufnahme von Referenz-Hellbild und Referenz-Dunkelbild. Durch bildpunktweise Subtraktion der beiden Bilder voneinander kann ein Referenz-Differenzbild (o. Abb.) erzeugt werden, beispielsweise durch eine entsprechende Bildverarbeitung in der Steuereinrichtung 9.

Folgend kann während einer Ein-Phase te der LED 8 mittels der Kamera 7 ein (erstes) Mess-Hellbild aufgenommen werden, und während einer unmittelbar vorangehenden oder folgenden Aus-Phase ta der LED 8 ein (zweites) Mess-Dunkelbild. Dann kann, beispielsweise mittels der Steuereinrichtung 9, das Mess-Dunkelbild bildpunktweise von dem Mess-Hellbild subtrahiert werden, oder umgekehrt, um ein Mess-Differenzbild zu erzeugen. Vorteilhafterweise werden das Referenz-Differenzbild und das Mess-Differenzbild auf gleiche Weise erzeugt.

Dies kann auch als: Differenzbild (t) = Hellbild (t) - Dunkelbild (t) bezeichnet werden, ggf. in absoluten Größen.

Fig.3 zeigt eine durch die Kamera 7 gemessene Strahlungsintensität ILED (in Watt pro Raumwinkel sr) eines beliebig herausgegriffenen Bildpunkts, der einer Oberfläche einer Speise G1 bis G3 zugeordnet ist, über die Zeit t (in s). Die Strahlungsintensität ILED stellt ein Maß für die Helligkeit des Bildpunkts dar. Die gemessene Strahlungsintensität ILED ist bei einem Hellbild in der Regel höher als bei einem Dunkelbild, da das Umgebungslicht UL den Garraum zusätzlich zu dem Nutzlicht NL beleuchtet und somit die Speise G1 bis G3 mehr Licht in Richtung der Kamera 7 reflektiert. Im Verlauf eines Garvorgangs kann sich die Stärke des Umgebungslichts UL ändern, so dass sich ein Unterschied der Strahlungsintensität ILED des Bildpunkts oder Pixels zwischen Hellbild und Dunkelbild ebenfalls ändert, z.B. wie hier gezeigt verringert. Auch kann durch eine Bräunung der Speise G1 bis G3 der Wert der von der Kamera 7 gemessenen Strahlungsintensität ILED des Bildpunkts für das Hellbild und für das Dunkelbild sinken.

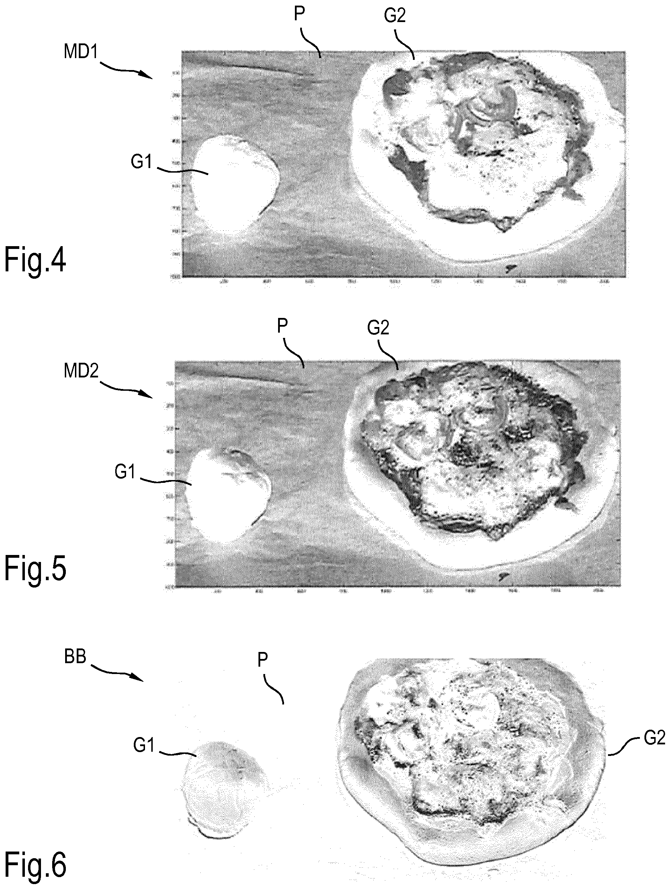

Fig.4 zeigt als Graustufenaufnahme ein Mess-Differenzbild MD1 zweier Speisen, nämlich eines Teigkörpers G1 und einer belegten Pizza G2, zu einem Zeitpunkt t1 > t0 des Garvorgangs. Fig.5 zeigt als Graustufenaufnahme ein Mess-Differenzbild MD2 der in Fig. 4 gezeigten zwei Speisen G1 und G2 zu einem noch weiter fortgeschrittenen Zeitpunkt t2 > t1 des Garvorgangs. In beiden Bildern ist beispielsweise das Backblech B mit Backpapier P belegt, das ebenfalls dunkel erscheint. Backpapier ist typischerweise braun. Somit würde ohne weitere Maßnahmen das Backpapier bei einer Bestimmung des Bräunungsgrads mitberücksichtigt werden, was die Bestimmung merklich verfälschen könnte.

Um zur Bestimmung des Bräunungsgrads nur Bildpunkte zu berücksichtigen, die einen Bräunungsfortschritt zeigen, wird das Mess-Differenzbild MD1, MD2 mit dem Referenz-Differenzbild verglichen und dazu zunächst das Referenz-Differenzbild von dem Mess-Differenzbild Md1, MD2 subtrahiert, oder umgekehrt. Das sich ergebende, zweifach differenzierte Bild (im Folgenden auch als "Bräunungsbild" BB bezeichnet), ist in Fig.6 gezeigt. Das Backpaper P weist praktisch keine dunklen Bildpunkte mehr auf, während die Speisen G1 und G2 weiterhin deutlich sichtbar sind.

Das Bräunungsbild BB zu einem Zeitpunkt t > t0 kann auch als: Bräunungsbild (t) = Mess-Differenzbild (t) - Referenz-Differenzbild (t0) ausgedrückt werden, ggf. in absoluten Größen

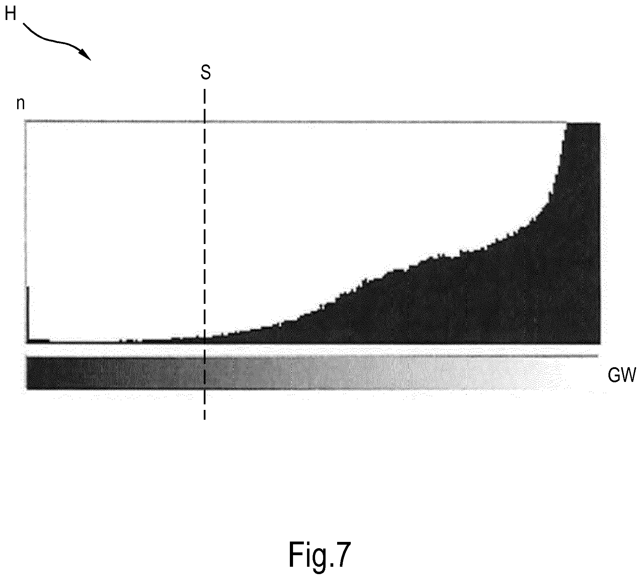

Folgend können die zu einer bestimmten Strahlungsintensität ILED oder Helligkeit zugehörigen Bildpunkte des Bräunungsbilds in einem Histogramm H aufgetragen werden, wie in Fig.7 gezeigt. Das Histogramm H zeigt dabei auf der x-Achse einen der Strahlungsintensität ILED zugeordneten Grauwert GW und auf der y-Achse eine Zahl n der den Grauwerten GW jeweils zugehörigen Bildpunkte. Die Graustufen können von schwarz (= Wert 0) bis weiß (= Wert 255) reichen. Dabei können weiße Bildpunkte und ggf. auch fast weiße Bildpunkte ausgeblendet oder maskiert werden.

Um zu bestimmen, ob ein gewünschter Bräunungsgrad erreicht worden ist, wird bestimmt, ob der Inhalt des Histogramms H ein vorgegebenes Kriterium erfüllt, nämlich hier, ob ein vorgegebener Anteil bzw. eine vorgegebene Zahl von Bildpunkten eine Mindestverfärbung (ausgedrückt durch ein Unterschreiten eines Graustufenwerts) erreicht hat. Dies kann durch Erreichen oder Unterschreiten eines Grauwert-Schwellwerts S durch diesen Anteil von Bildpunkten bestimmt werden. Der Schwellwert S kann z.B. durch einen Nutzer verändert werden.

Ist dies der Fall, kann durch die Steuereinrichtung mindestens eine Aktion ausgelöst werden. So kann - neben einem Auslösen eines optischen und/oder akustischen Signals - über das Funkmodul 11 eine Nachricht (z.B. einschließlich eines durch die Kamera 7 aufgenommenen Bilds) an ein Mobiltelefon o.ä. des Nutzers ausgegeben werden. Der Nutzer kann des Haushalts-Gargerät 1 über die das Mobiltelefon o.ä. fernsteuern, beispielsweise den Garvorgang verlängern, falls er nach Ansicht des Bilds der Meinung ist, dass die Bräunung noch nicht ausreicht. Das Haushalts-Gargerät 1 kann das Heizen des Garraums 1 aber auch selbsttätig abschalten.

Selbstverständlich ist die vorliegende Erfindung nicht auf das gezeigte Ausführungsbeispiel beschränkt.

So kann das Backpapier ein vorgegebenes Muster aufweisen, anhand dessen es maskiert und/oder bei der Erstellung des Histogramms unberücksichtigt bleibt. Auch können zur Bestimmung des Bräunungsgrads zu berücksichtigende Bereiche der Bilder durch jeweilige "Bounding Boxes" vorgegeben sein. Die Bounding Boxes können durch die Steuereinrichtung 9 und/oder durch einen Nutzer vorgegeben werden. Der Nutzer kann diese z.B. mittels des berührungsempfindlichen Bildschirms 10 und/oder über das Funkmodul 11 mittels eines Mobiltelefons / Smartphones / Tablets usw. einstellen.

Auch kann das Haushalts-Gargerät 1 eine drahtgebundene Schnittstelle zu einem Netzwerk aufweisen, z.B. einen Ethernet-Anschluss.

### Bezugszeichenliste

- 1: Haushalts-Gargerät
- 2: Garraum
- 3: Beschickungsöffnung
- 4: Tür
- 5: Sichtfenster
- 6: Decke einer Garraumwandung
- 7: Kamera
- 8: LED
- 9: Steuereinrichtung
- 10: Berührungsempfindlicher Bildschirm
- 11: Funkmodul
- B: Backblech
- BB: Bräunungsbild
- G1-G3: Speisen
- GW: Grauwert
- H: Histogramm
- Imax: Maximaler elektrischer Strom
- ILED: Strahlungsintensität
- MD1: Mess-Differenzbild zum Zeitpunkt t1
- MD2: Mess-Differenzbild zum Zeitpunkt t2
- NL: Nutzlicht
- n: Zahl der Bildpunkte
- P: Backpapier
- S: Schwellwert
- t: Zeit
- ta: Aus-Phase
- te: Ein-Phase
- t0: Beginn eines Garvorgangs
- t1: Späterer Zeitpunkt
- t2: Noch späterer Zeitpunkt
- UL: Umgebungslicht

## Patentansprüche

1. Verfahren zum Feststellen eines Bräunungsgrads von Gargut (G1-G3) in einem Garraum (2) eines Haushalts-Gargeräts (1), welches Haushalts-Gargerät (1) eine in den Garraum (2) gerichtete Kamera (7) und eine Lichtquelle (8) zum Beleuchten des Garraums (2) aufweist, und wobei
- mittels der Kamera (7) ein Referenz-Differenzbild als Differenz aus einem ersten, bei einer ersten Helligkeit der Lichtquelle (8) aufgenommenen Bild des Garguts (G1-G3) und einem zweiten, bei einer zweiten Helligkeit der Lichtquelle (8) aufgenommenen Bild des Garguts (G1-G3) erzeugt wird, folgend
- mittels der Kamera (7) ein Mess-Differenzbild (MD1, MD2) als Differenz aus einem ersten, bei der ersten Helligkeit der Lichtquelle (8) aufgenommenen Messbild des Garguts (G1-G3) und einem zweiten, bei der zweiten Helligkeit der Lichtquelle (8) aufgenommenen Messbild des Garguts (G1-G3) erzeugt wird,
- ein Bräunungsbild durch Subtraktion (BB, H) des Mess-Differenzbilds (MD1, MD2) mit dem Referenz-Differenzbild erzeugt wird und
- der Bräunungsgrad durch Bestimmen eines vorgegebenen Anteils (n) von Bildpunkten in dem Bräunungsbild mit einer Mindestverfärbung festgestellt wird.

2. Verfahren nach Anspruch 1, wobei die erste Helligkeit Null ist und die zweite Helligkeit einer Helligkeit bei eingeschalteter Lichtquelle (8) entspricht.

3. Verfahren nach einem der vorhergehenden Ansprüche, wobei die Lichtquelle (8) pulsweitenmoduliert mit einer augenträgen Frequenz betrieben wird.

4. Verfahren nach den Ansprüchen 2 und 3, bei dem das erste Messbild während mindestens einer Aus-Phase (ta) einer Pulsweitenmodulierung aufgenommen wird und das zweite Messbild während mindestens einer Ein-Phase (te) der Pulsweitenmodulierung aufgenommen wird.

5. Verfahren nach einem der vorhergehenden Ansprüche, wobei die Lichtquelle (8) eine LED aufweist.

6. Verfahren nach den Ansprüche 4 und 5, bei dem das zweite Messbild während mindestens einer der mindestens einen Aus-Phase (ta) unmittelbar vorangehenden oder folgenden Ein-Phase (te) der Pulsweitenmodulierung aufgenommen wird.

7. Verfahren nach einem der vorhergehenden Ansprüche, wobei das Mess-Differenzbild (MD1, MD2) zum Erzeugen des Bräunungsbilds bereichsweise mit dem Referenz-Differenzbild subtrahiert wird.

8. Verfahren nach einem der vorhergehenden Ansprüche, wobei nur Bereiche des Mess-Differenzbilds (MD1, MD2) mit dem Referenz-Differenzbild subtrahiert werden,
- die mit einem zeitlichen Fortschritt eines Garvorgangs dunkler geworden sind,
- die frei von einem vorgegebenen Muster sind und/oder
- die von einem Nutzer vorgegeben worden sind.

9. Verfahren nach einem der vorhergehenden Ansprüche, wobei dann, wenn durch das Haushalts-Gargerät (1) festgestellt wird, dass ein gewünschter Bräunungsgrad erreicht worden ist, mindestens eine Aktion ausgelöst wird.

10. Verfahren nach einem der vorhergehenden Ansprüche, wobei das Bräunungsbild mehrfach für unterschiedliche Mess-Differenzbilder (MD1, MD2) und das gleiche Referenzbild erzeugt wird und der Bräunungsgrad jeweils durch Bestimmen des vorgegebenen Anteils (n) der Bildpunkte in dem Bräunungsbild mit der Mindestverfärbung festgestellt wird.

11. Verfahren nach einem der vorhergehenden Ansprüche, wobei das Referenz-Differenzbild zu Beginn eines Garvorgangs aufgenommen wird.

12. Verfahren nach einem der vorhergehenden Ansprüche, wobei eine alterungsbedingte Helligkeitsreduzierung der Lichtquelle (8) kompensiert wird.

13. Haushalts-Gargerät (1), aufweisend eine in einen Garraum (2) gerichtete Kamera (7), eine Lichtquelle (8) zum Beleuchten des Garraums (2) und eine mit der Kamera (7) und der Lichtquelle (8) gekoppelte Steuereinrichtung (9), **dadurch gekennzeichnet, dass** das Haushalts-Gargerät (1) zum Durchführen des Verfahrens nach einem der vorhergehenden Ansprüche eingerichtet ist.

## Claims

1. Method for establishing a degree of browning of food to be cooked (G1-G3) in a cooking chamber (2) of a household cooking appliance (1), which household cooking appliance (1) has a camera (7) directed into the cooking chamber (2) and a light source (8) for illuminating the cooking chamber (2), and wherein
- by means of the camera (7), a reference difference image is generated as the difference between a first image of the food to be cooked (G1-G3) captured at a first brightness of the light source (8) and a second image of the food to be cooked (G1-G3) captured at a second brightness of the light source (8), subsequently
- by means of the camera (7), a measurement difference image (MD1, MD2) is generated as the difference between a first measurement image of the food to be cooked (G1-G3) captured at a first brightness of the light source (8) and a second measurement image of the food to be cooked (G1-G3) captured at a second brightness of the light source (8),
- a browning image is generated by subtraction (BB, H) of the measurement difference image (MD1, MD2) using the reference difference image and
- the degree of browning is established by determining a predefined proportion (n) of pixels in the browning image with a minimum colouration.

2. Method according to claim 1, wherein the first brightness is zero and the second brightness corresponds to a brightness when the light source (8) is switched on.

3. Method according to one of the preceding claims, wherein the light source (8) is operated by pulse-width modulation at an eye inertia frequency.

4. Method according to claims 2 and 3, wherein the first measurement image is captured during at least one off-phase (ta) of a pulse-width modulation and the second measurement image is captured during at least one on-phase (te) of the pulse-width modulation.

5. Method according to one of the preceding claims, wherein the light source (8) has an LED.

6. Method according to claims 4 and 5, in which the second measurement image is captured during at least one on-phase (te) of the pulse-width modulation which immediately precedes the at least one off-phase (ta).

7. Method according to one of the preceding claims, wherein the measurement difference image (MD1, MD2) is subtracted using the reference difference image in some areas in order to generate the browning image.

8. Method according to one of the preceding claims, wherein only areas of the measurement difference image (MD1, MD2) are subtracted using the reference difference image,
- which have become darker as a cooking process progresses over time,
- which are free of a predetermined pattern and/or
- which have been predetermined by a user.

9. Method according to one of the preceding claims, wherein if the household appliance (1) has established that a desired degree of browning has been reached, at least one action is triggered.

10. Method according to one of the preceding claims, wherein the browning image is generated repeatedly for different measurement difference images (MD1, MD2) and the same reference image and the degree of browning is established in each case by determining the predefined proportion (n) of pixels in the browning image with the minimum colouration.

11. Method according to one of the preceding claims, wherein the reference difference image is captured at the start of a cooking process.

12. Method according to one of the preceding claims, wherein a reduction in the brightness of the light source (8) due to ageing is compensated.

13. Household cooking appliance (1) having a camera (7) directed into a cooking chamber (2), a light source (8) for illuminating the cooking chamber (2) and a control device (9) coupled to the camera (7) and the light source (8), **characterised in that** the household cooking appliance (1) is configured for carrying out the method according to one of the preceding claims.

## Revendications

1. Procédé de constatation d'un degré de dorage d'un article à cuire (G1-G3) dans l'espace de cuisson (2) d'un appareil de cuisson électroménager (1), lequel appareil de cuisson électroménager (1) comprend une caméra (7) dirigée dans l'espace de cuisson (2) ainsi qu'une source lumineuse (8) destinée à éclairer l'espace de cuisson (2) et dans lequel
- au moyen de la caméra (7) une image différentielle de référence est produite comme étant une différence entre une première image de l'article à cuire (G1-G3) prise avec une première luminosité de la source lumineuse (8) et une deuxième image de l'article à cuire (G1-G3) prise avec une deuxième luminosité de la source lumineuse (8), ensuite
- au moyen de la caméra (7) une image différentielle de mesure (MD1, MD2) est produite comme étant une différence entre une première image de mesure de l'article à cuire (G1-G3) prise avec une première luminosité de la source lumineuse (8) et une deuxième image de mesure de l'article à cuire (G1-G3) prise avec une deuxième luminosité de la source lumineuse (8),
- une image de dorage étant produite par soustraction (BB, H) de l'image différentielle de mesure (MD1, MD2) de l'image différentielle de référence, et
- le degré de dorage étant constaté par détermination d'une partie prédéfinie (n) de points d'image dans l'image de dorage à l'aide d'une colorisation minimale.

2. Procédé selon la revendication 1, dans lequel la première luminosité est nulle et la deuxième luminosité correspond à une luminosité la source lumineuse étant allumée (8).

3. Procédé selon l'une des revendications précédentes, dans lequel la source lumineuse (8) fonctionne en modulation de largeur d'impulsion à une fréquence rétinienne.

4. Procédé selon les revendications 2 et 3, dans lequel la première image de mesure est prise pendant au moins une phase éteinte (ta) de la modulation de largeur d'impulsion et la deuxième image de mesure est prise pendant au moins une phase allumée (te) de la modulation de largeur d'impulsion.

5. Procédé selon l'une des revendications précédentes, dans lequel la source lumineuse (8) comprend une LED.

6. Procédé selon les revendications 4 et 5, dans lequel la deuxième image de mesure est prise pendant au moins l'une de la au moins une phase éteinte (ta) directement avant ou suivant la phase allumée (te) de la modulation de largeur d'impulsion.

7. Procédé selon l'une des revendications précédentes, dans lequel l'image différentielle de mesure (MD1, MD2) est soustraite pour la production de l'image de dorage par zone de l'image différentielle de référence.

8. Procédé selon l'une des revendications précédentes, dans lequel seules des zones de l'image différentielle de mesure (MD1, MD2) sont soustraites de l'image différentielle de référence,
- lesquelles sont devenues plus sombres après poursuite dans le temps d'un processus de cuisson,
- lesquelles sont exemptes d'un échantillon prédéfini et/ou
- lesquelles sont prédéfinies par un utilisateur.

9. Procédé selon l'une des revendications précédentes, dans lequel ce n'est que quand l'appareil de cuisson électroménager (1) constate qu'un degré de dorage souhaité a été atteint, qu'au moins une action est déclenchée.

10. Procédé selon l'une des revendications précédentes, dans lequel l'image de dorage est produite plusieurs fois pour les différentes images différentielles de mesure (MD1, MD2) et pour l'image référentielle identique, et le degré de dorage est constaté à chaque fois par détermination de la part (n) prédéfinie des points d'image dans l'image de dorage à l'aide d'une colorisation minimale.

11. Procédé selon l'une des revendications précédentes, dans lequel l'image différentielle de référence est prise au début d'un processus de cuisson.

12. Procédé selon l'une des revendications précédentes, dans lequel une réduction de luminosité de la source lumineuse (8) conditionnée par un vieillissement est compensée.

13. Appareil de cuisson électroménager (1) comprenant une caméra (7) dirigée dans un espace de cuisson (2), une source lumineuse (8) destinée à éclairer l'espace de cuisson (2) et un dispositif de commande (9) couplée avec la caméra (7) et la source lumineuse (8), **caractérisé en ce que** l'appareil de cuisson électroménager (1) est installé pour réaliser le procédé selon l'une des revendications précédentes.
